# EUROPEAN PATENT SPECIFICATION

(11) **EP 3 842 123 B1**
(45) Date of publication and mention of the grant of the patent: **03.01.2024**
(21) Application number: 20210310.7
(22) Date of filing: 27.11.2020
(51) Int. Cl.: B01D 53/14, F24F 8/15, F24F 8/60, F24F 110/70, F24F 110/76

(54) **AN AIR PURIFIER**
EIN LUFTREINIGER
UN PURIFICATEUR D'AIR

(30) Priority: 24.12.2019 TR 201921330
(43) Date of publication of application: 30.06.2021
(73) Proprietor: Arçelik Anonim Sirketi, 34445 Istanbul (TR)
(72) Inventor: SARICIFTCI, Niyazi Serdar, 34445 ISTANBUL (TR); YESILCUBUK, Alper, 34445 ISTANBUL (TR); YAVUZ, Pinar, 34445 ISTANBUL (TR)

(56) References cited:
- WO-A1-2007/128584
- WO-A2-2006/036396
- JP-A- 2003 144 828
- US-A1- 2015 290 576
- US-A1- 2018 224 145

## Description

The present invention relates to an air purifier which is used in indoor environments, such as rooms, and which purifies the air.

Today, the need for ventilation and the need for fresh air becomes more important in environments such as homes and offices especially in high-rise buildings. Plants can be a temporary solution for daytime but when the sunlight disappears; plants also start to produce carbon dioxide like human beings and the air quality of the environment decreases. Especially in high-rise buildings, it is not always possible to continuously keep the windows open and ventilate the environment. The continuously rising carbon dioxide density in the air adversely affects human health. The amount of oxygen in the environment directly affects the metabolic rate of people and the lack thereof creates weakness and fatigue in humans. Ensuring that the amount of oxygen in the closed environment does not fall below a certain level while reducing the amount of carbon dioxide generated in the environment makes the human metabolism much more vivid and vigorous.

Today, air purifiers are known, which comprises carbon dioxide absorbing filters and which purifies the indoor air. However, in most of these devices, it is very difficult for the user to periodically clean the filter or problems such as bacterial formation in the filter are encountered.

In the state of the art Japanese Patent Application No. JP2003144828A, an air purifier is disclosed, which is operated with an acid- and base-based ion exchanger system. WO 2006/036396 discloses a system for the extraction of carbon dioxide from air.

In the state of the art devices wherein carbon dioxide is resolved by electrodialysis methods as a result of chemical reactions, and the air in a closed environment is cleaned, different chemicals are generated as by-products, which cause the risk of the users to be damaged by these chemicals generated in the device.

The aim of the present invention is the realization of an air purifier which cleans the air with high carbon dioxide concentration in closed environments, such as rooms, etc.

Another aim of the present invention is the realization of an air purifier which is modular so as to be attached to/detached from an air conditioner.

The air purifier of the present invention comprises an air inlet opening through which the air is sucked in, a CO₂ absorbing unit wherein the carbon dioxide is absorbed from the air having high carbon dioxide density, and an air outlet opening through which the air which is cleansed of CO₂ is sent back to the environment wherein the air purification is performed.

The air purifier of the present invention comprises an acid dosing unit and a base dosing unit.

The environment wherein the air is purified is a closed environment.

The air purifier of the present invention comprises a control unit which controls the operation of the device, and which controls the delivery of acid and base from the acid dosing unit and the base dosing unit to the CO₂ absorbing unit in the correct time and order. First base and then acid is dosed to the CO₂ absorbing unit. The correct moment is the moment where the O₂/CO₂ balance in the environment is measured by means of a sensor and the amount of carbon dioxide in the environment exceeds a level predetermined by the producer. From this moment, bas is supplied to the CO₂ absorbing unit.

In the air purifier of the present invention, an O₂/CO₂ sensor is provided, which is disposed in the vicinity of the air inlet opening. Depending on the oxygen and carbon dioxide values measured by said sensor, the device is operated, and first the base solution is supplied to the CO₂ absorbing unit. Thus, by means of the reaction between the carbon dioxide in the air and the base solution, carbonate compounds are generated and carbon dioxide is trapped.

The carbonate formation is detected by pH sensors in the CO₂ absorbing unit, and after the carbonate compound is formed in the CO₂ absorbing unit, the base supply to the CO₂ absorbing unit is cut off and the acid solution is supplied. Thus, salt formation is obtained, and the carbon dioxide is separated from the clean air. The carbon dioxide resolved in the CO₂ absorbing unit is released from the room, that is to the open air outside the building via a separate CO₂ tube. The clean air with high oxygen cleansed of carbon dioxide is released into the environment through the air outlet opening.

In another embodiment of the present invention, the air purifier can be operated by being manually controlled with a button as per user need independent of the O₂/CO₂ sensor measurements.

The CO₂ tube in the air purifier is a chimney which extends out of the room into the open air.

In an embodiment of the present invention, the air purifier can be integrated as a modular device with an air conditioner, and by connecting the outlet of the air conditioner and the CO₂ tube of the air purifier, carbon dioxide can be released from the indoor environment into the open air.

The air purifier of the present invention further comprises a sensor which measures the liquid level in order to control the acid or base solution overflows in the CO₂ absorbing unit.

The air purifier of the present invention comprises an electrodialysis unit wherein the salt formed in the CO₂ absorbing unit is converted back into acid and base solutions in order to prevent the user from continuously supplying acid or base to the device and to enable the air purifier to operate as a continuous system. A feedback tube is provided between the CO₂ absorbing unit and the electrodialysis unit, and the salt formed in the CO₂ absorbing unit is supplied to the electrodialysis unit. The salt in the electrodialysis unit is resolved back to acid and base. Thus, the air purifier is enabled to be operated in a cycle without the need for continuously filling and discharging the acid and base dosing units in the purifier.

The electrodialysis unit comprises ion exchanger membranes. In a preferred embodiment of the present invention, the electrodialysis unit comprises a bipolar membrane, two anion membranes and two cation membranes. Thus, the resolution of salt into acid and base is performed more efficiently. The electrodialysis unit comprises at least one anode, at least one cathode, and at least one membrane disposed between the anode and the cathode. Moreover, rinse tanks are disposed in the vicinity of the electrodialysis unit, wherein conductive electrolyte solutions are provided.

By means of the present invention, an air purifier is realized, which can continuously operate without the need for user intervention and wherein the carbon dioxide in a closed environment is resolved and the air therein is purified.

The model embodiments that relate to the air purifier realized in order to attain the aim of the present invention are illustrated in the attached figures, where:

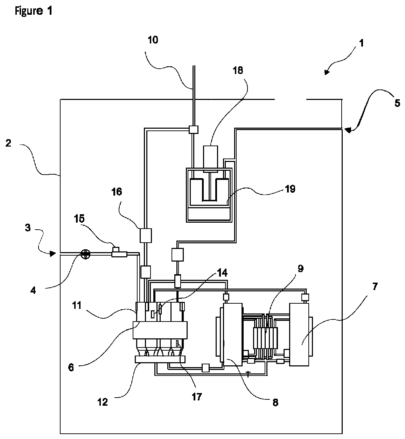

**Figure 1** - is the schematic view of the air purifier wherein the CO₂ absorbing unit comprises a tube in an embodiment of the present invention.

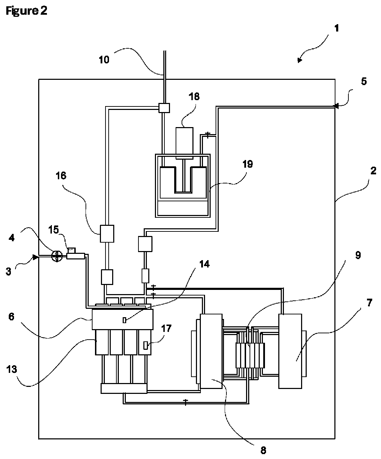

**Figure 2** - is the schematic view of the air purifier wherein the CO₂ absorbing unit comprises a cartridge in another embodiment of the present invention.

The elements illustrated in the figures are numbered as follows:
1. Air purifier
2. Body
3. Air inlet opening
4. Fan
5. Air outlet opening
6. CO₂ absorbing unit
7. Acid dosing unit
8. Base dosing unit
9. Electrodialysis unit
10. CO₂ tube
11. Tube
12. Rotary table
13. Cartridge
14. pH sensor
15. O₂/CO₂ sensor
16. Control unit
17. Sensor
18. Condenser
19. Water electrolysis unit

The air purifier (1) comprises a body (2); an air inlet opening (3) provided on the body (2); a fan (4) which enables the air to be directed through the air inlet opening (3) into the body (2); and an air outlet opening (5) which enables the air purified in the body (2) to be released out of the body (2);

The air purifier (1) of the present invention comprises
- a CO₂ absorbing unit (6) into which the air is sucked;
- a base dosing unit (8) which supplies a base solution into the CO₂ absorbing unit (6);
- an acid dosing unit (7) which supplies an acid solution into the CO₂ absorbing unit (6);
- a CO₂ tube (10) enabling the carbon dioxide absorbed in the CO₂ absorbing unit (6) to be discharged to outside the environment wherein the air is to be purified;
- an electrodialysis unit (9) wherein the salt formed after the base solution and the acid solution are respectively supplied to the CO₂ absorbing unit (6) is resolved back to acid and base.

In the air purifier (1) of the present invention, the air with low oxygen and high carbon dioxide ratio in a closed room environment, that is the environment wherein the air is to be purified, is retained by the CO₂ absorbing unit (6). The base solution is dosed to the CO₂ absorbing unit (6) by the base dosing unit (8) When the base solution is dosed to the CO₂ absorbing unit (6), the carbon dioxide gas is converted into a carbonate compound with the metal ions in the basic solution, thus retaining the carbon dioxide. The clean air cleansed of carbon dioxide is released from the air outlet opening (5) to the environment wherein the air is purified. After the base solution is dosed to the CO₂ absorbing unit (6), the acid solution is supplied by an acid dosing unit (7). Thus, while the carbon dioxide is released in the CO₂ absorbing unit (6), the acid and the carbonate are combined to form salt. The carbon dioxide released after the salt formation is discharged out of the environment wherein the air is purified, for example outside the building via a CO₂ tube (10). The salt solution formed in the CO₂ absorbing unit (6) is sent to the electrodialysis unit (9) so as to be resolved back into acid and base and be supplied back to the acid dosing unit (7) and the base dosing unit (8). Thus, the carbon dioxide in the air is removed from the environment wherein the air is purified without the formation of waste chemical by-products. Moreover, the air purifier (1) of the present invention automatically continues to operate in a continuous cycle without the need for user intervention and the need for continuous regeneration (filling/discharging) of the acid dosing unit (7) or the base dosing unit (8).

In an embodiment of the present invention, the air purifier (1) comprises a pH sensor (14) which is disposed in the CO₂ absorbing unit (6), and a control unit (16) which first supplies the base solution into the CO₂ absorbing unit (6) from the base dosing unit (8) and which supplies the acid solution to the CO₂ absorbing unit (6) after the formation of carbonate due to the combination of the base solution and the carbon dioxide in the CO₂ absorbing unit (6). The control unit (16) detects the carbonate formation in the environment according to the data received from the pH sensor (14), and actuates the acid dosing unit (7).

In the present invention, the air purifier (1) comprises a CO₂ absorbing unit (6) having a moving rotary table (12), and a plurality of tubes (11) disposed on the rotary table (12). In this embodiment, a supply tube extends from each of the acid dosing unit (7) and the base dosing unit (8), and the tubes (11) disposed on the rotary table (12) are supplied respectively according to the number of people in the environment. For example, since the carbon dioxide concentration in a room environment with ten people is high, supplying a single tube (11) will not ensure sufficient carbon dioxide retention. Therefore, the acid and base supply tubes first supply to the first tube (11) and then to the other tubes (11), ensuring sufficient carbon dioxide retention.

Alternatively, the air purifier (1) according to the invention comprises a CO₂ absorbing unit (6) having a plurality of cartridges (13) arranged side by side and in rows one under the other. In this embodiment, separate supply tubes extend from the acid dosing unit (7) and the base dosing unit (8) to each cartridge (13), and the CO₂ absorbing unit (6) is stationary. According to the data received from the control unit (16) according to the number of people in the environment, the supply tubes first supply the base solution and then the acid solution to a plurality of cartridges (13) at the same time. In this embodiment, a CO₂ absorbing unit (6) is provided which ensures the retention of a larger amount of carbon dioxide in without occupying too much space the body (2).

In an embodiment of the present invention, the air purifier (1) comprises a control unit (16) which doses base and acid simultaneously to a plurality of tubes (11) or a plurality of cartridges (13) depending on the carbon dioxide density in the environment wherein the air is to be purified, and thus ensures that the optimum amount of carbon dioxide predetermined by the producer is retained.

In an embodiment of the present invention, the air purifier (1) comprises a condenser (18) which condenses the humidity in the environment, and a water electrolysis unit (19) wherein the water coming from the condenser (18) is resolved.

In an embodiment of the present invention, the air purifier (1) comprises an O₂/CO₂ sensor (15) which is disposed at the air inlet opening (3) and which measures the carbon dioxide and oxygen amount in the environment, and a control unit (16) which compares the data received from the O₂/CO₂ sensor (15) with the required optimum carbon dioxide-oxygen amount in a closed environment predetermined by the producer, and operates the air purifier (1).

In an embodiment of the present invention, the air purifier (1) comprises a sensor which is disposed in the CO₂ absorbing unit (6) and which measures the liquid level in the CO₂ absorbing unit (6) during the dosing of the acid and base solutions. Thus, overflows which may occur while supplying the acid and base solutions into the CO₂ absorbing unit (6) are prevented.

The air purifier (1) of the present invention can be used as an apparatus which can be detachably attached to an air conditioner or completely fixed into the air conditioner. In this embodiment, the outlet line of the air conditioner is connected to the CO₂ tube (10), and the carbon dioxide is sent outside the closed room environment.

By means of the present invention, an air purifier (1) is realized, wherein the carbon dioxide is discharged out of the environment wherein the is purified.

## Claims

1. An air purifier (1) which purifies the air in an indoor environment in a building **comprising** a body (2); an air inlet opening (3) provided on the body (2); a fan (4) which enables the air to be directed through the air inlet opening (3) into the body (2); and an air outlet opening (5) which enables the air purified in the body (2) to be released out of the body (2);
o a CO₂ absorbing unit (6) into which the air is sucked;
o a base dosing unit (8) which supplies a base solution into the CO₂ absorbing unit (6);
∘ an acid dosing unit (7) which supplies an acid solution into the CO₂ absorbing unit (6);
∘ a CO₂ tube (10) enabling the carbon dioxide absorbed in the CO₂ absorbing unit (6) to be discharged to outside the environment wherein the air is to be purified; and
∘ an electrodialysis unit (9) wherein the salt formed after the base solution and the acid solution are respectively supplied to the CO₂ absorbing unit (6) is resolved back to acid and base **characterized by**
∘ the CO₂ absorbing unit (6) having a moving rotary table (12), and a plurality of tubes (11) disposed on the rotary table (12) or the CO₂ absorbing unit (6) having a plurality of cartridges (13) arranged side by side and in rows one under the other.

2. An air purifier (1) as in Claim 1, **characterized by** a pH sensor (14) which is disposed in the CO₂ absorbing unit (6), and a control unit (16) which first supplies the base solution into the CO₂ absorbing unit (6) from the base dosing unit (8) and which supplies the acid solution to the CO₂ absorbing unit (6) after the formation of carbonate due to the combination of the base solution and the carbon dioxide in the CO₂ absorbing unit (6).

3. An air purifier (1) as in Claim 1, **characterized by** a control unit (16) which doses base and acid simultaneously to a plurality of tubes (11) or a plurality of cartridges (13) depending on the carbon dioxide density in the environment wherein the air is to be purified, and thus ensures that the optimum amount of carbon dioxide predetermined by the producer is retained.

4. An air purifier (1) as in any one of the above claims, **characterized by** a condenser (18) which condenses the humidity in the environment, and a water electrolysis unit (19) wherein the water coming from the condenser (18) is resolved.

5. An air purifier (1) as in any one of the above claims, **characterized by** an O₂/CO₂ sensor (15) which is disposed at the air inlet opening (3) and which measures the carbon dioxide and oxygen amount in the environment, and a control unit (16) which compares the data received from the O₂/CO₂ sensor (15) with the required optimum carbon dioxide-oxygen amount in a closed environment predetermined by the producer, and operates the air purifier (1).

6. An air purifier (1) as in any one of the above claims, **characterized by** a sensor which is disposed in the CO₂ absorbing unit (6) and which measures the liquid level in the CO₂ absorbing unit (6) during the dosing of the acid and base solutions.

7. An air conditioner comprising an air purifier (1) as in any one of the above claims.

## Patentansprüche

1. Ein Luftreiniger (1), der die Luft in einer Innenraumumgebung in einem Gebäude reinigt, **umfasst** einen Körper (2); eine Lufteinlassöffnung (3), die an dem Körper (2) vorgesehen ist; ein Gebläse (4), das es ermöglicht, die Luft durch die Lufteinlassöffnung (3) in den Körper (2) zu leiten; und eine Luftauslassöffnung (5), die es ermöglicht, die in dem Körper (2) gereinigte Luft aus dem Körper (2) herauszulassen;
∘ eine CO2-Absorptionseinheit (6), in die die Luft eingesaugt wird,
∘ eine Basendosiereinheit (8), die eine Basenlösung in die CO2-Absorptionseinheit (6) einspeist;
∘ eine Säuredosiereinheit (7), die eine Säurelösung in die CO2-Absorptionseinheit (6) einspeist;
∘ eine CO2-Röhre (10), die es ermöglicht, das in der CO2-Absorptionseinheit (6) absorbierte Kohlendioxid in die Umgebung, in der die Luft gereinigt werden soll, nach außen abzuleiten; und
∘ eine Elektrodialyseeinheit (9), in der das Salz, das gebildet wird, nachdem die Basenlösung und die saure Lösung jeweils der CO2-Absorptionseinheit (6) zugeführt werden, wieder in Säure und Base zerlegt wird, **gekennzeichnet ist es durch**
∘ dass die CO2-Absorptionseinheit (6) einen beweglichen Drehtisch (12) und eine Vielzahl von auf dem Drehtisch (12) angeordneten Rohren (11) aufweist oder die CO2-Absorptionseinheit (6) eine Vielzahl von nebeneinander und in Reihen untereinander angeordneten Patronen (13) aufweist.

2. Ein Luftreiniger (1), wie in Anspruch 1 aufgeführt, **ist dadurch gekennzeichnet, dass** ein pH-Sensor (14), der in der CO2-Absorptionseinheit (6) angeordnet ist, und eine Steuereinheit (16), die zunächst die Basenlösung von der Basendosiereinheit (8) in die CO2-Absorptionseinheit (6) einspeist und die nach der Bildung von Karbonat aufgrund der Kombination der Basenlösung und des Kohlendioxids in der CO2-Absorptionseinheit (6) die Säurelösung einspeist.

3. Ein Luftreiniger (1), wie in Anspruch 1 aufgeführt, **ist dadurch gekennzeichnet, dass** eine Steuereinheit (16), die in Abhängigkeit von der Kohlendioxiddichte in der Umgebung, in der die Luft gereinigt werden soll, einer Vielzahl von Rohren (11) oder einer Vielzahl von Patronen (13) gleichzeitig Lauge und Säure zuführt und so dafür sorgt, dass die vom Hersteller vorgegebene optimale Menge an Kohlendioxid zurückgehalten wird.

4. Ein Luftreiniger (1), wie in einem der vorherigen Ansprüchen aufgeführt, **ist dadurch gekennzeichnet, dass** ein Kondensator (18), der die Feuchtigkeit in der Umgebung kondensiert, und eine Wasserelektrolyseeinheit (19), in der das von dem Kondensator (18) kommende Wasser aufgelöst wird.

5. Ein Luftreiniger (1), wie in einem der vorherigen Ansprüchen aufgeführt, **ist dadurch gekennzeichnet, dass** ein O2/CO2-Sensor (15), der an der Lufteinlassöffnung (3) angeordnet ist und der die Kohlendioxid- und Sauerstoffmenge in der Umgebung misst, und eine Steuereinheit (16), die die vom O2/CO2-Sensor (15) empfangenen Daten mit der erforderlichen optimalen Kohlendioxid-Sauerstoffmenge in einer geschlossenen Umgebung, die vom Hersteller vorgegeben ist, vergleicht und den Luftreiniger (1) betreibt.

6. Ein Luftreiniger (1), wie in einem der vorherigen Ansprüchen aufgeführt, **ist dadurch gekennzeichnet, dass** ein Sensor, der in der CO2-Absorptionseinheit (6) angeordnet ist und der den Flüssigkeitsstand in der CO2-Absorptionseinheit (6) während der Dosierung der Säure- und Basenlösungen misst.

7. Eine Klimaanlage umfasst einen Luftreiniger (1) nach einem der oben genannten Ansprüche.

## Revendications

1. Un purificateur d'air (1) qui purifie l'air dans un environnement intérieur d'un bâtiment **comprenant** un corps (2) ; une ouverture d'entrée d'air (3) prévue sur le corps (2) ; un ventilateur (4) qui permet à l'air d'être dirigé à travers l'ouverture d'entrée d'air (3) dans le corps (2) ; et une ouverture de sortie d'air (5) qui permet à l'air purifié dans le corps (2) d'être libéré hors du corps (2) ;
∘ une unité d'absorption du CO₂ (6) dans laquelle l'air est aspiré ;
∘ une unité de dosage de base (8) qui fournit une solution de base à l'unité d'absorption du CO₂ (6) ;
∘ une unité de dosage d'acide (7) qui fournit une solution acide à l'unité d'absorption du CO₂ (6) ;
∘ un tube de CO₂ (10) permettant au dioxyde de carbone absorbé dans l'unité d'absorption de CO₂ (6) d'être évacué à l'extérieur de l'environnement dans lequel l'air doit être purifié ; et
∘ une unité d'électrodialyse (9) dans laquelle le sel formé après que la solution basique et la solution acide ont été respectivement fournies à l'unité d'absorption du CO₂ (6) est ramené à l'acide et à la base **caractérisés par**
∘ l'unité d'absorption de CO₂ (6) comporte une table rotative mobile (12) et plusieurs tubes (11) disposés sur la table rotative (12) ou l'unité d'absorption de CO₂ (6) comporte plusieurs cartouches (13) disposées côte à côte et en rangées l'une sous l'autre.

2. Un purificateur d'air (1) selon la déclaration 1, **caractérisé par** un capteur de pH (14) qui est disposé dans l'unité d'absorption de CO₂ (6), et une unité de commande (16) qui fournit d'abord la solution de base dans l'unité d'absorption de CO₂ (6) à partir de l'unité de dosage de base (8) et qui fournit la solution acide à l'unité d'absorption de CO₂ (6) après la formation de carbonate en raison de la combinaison de la solution de base et du dioxyde de carbone dans l'unité d'absorption de CO₂ (6).

3. Un purificateur d'air (1) selon la déclaration 1, **caractérisé par** une unité de contrôle (16) qui dose la base et l'acide simultanément à une pluralité de tubes (11) ou à une pluralité de cartouches (13) en fonction de la densité de dioxyde de carbone dans l'environnement dans lequel l'air doit être purifié, et assure ainsi que la quantité optimale de dioxyde de carbone prédéterminée par le producteur est retenue.

4. Un purificateur d'air (1) selon l'une quelconque des déclarations précédentes, **caractérisé par** un condenseur (18) qui condense l'humidité de l'environnement, et une unité d'électrolyse de l'eau (19) dans laquelle l'eau provenant du condenseur (18) est résolue.

5. Un purificateur d'air (1) selon l'une quelconque des déclarations précédentes, **caractérisé par** un capteur O₂/CO₂ (15 ) disposé au niveau de l'ouverture d'entrée d'air (3) et qui mesure la quantité de dioxyde de carbone et d'oxygène dans l'environnement, et une unité de commande (16) qui compare les données reçues du capteur O₂/CO₂ (15) avec la quantité optimale requise de dioxyde de carbone et d'oxygène dans un environnement fermé prédéterminé par le producteur, et fait fonctionner le purificateur d'air (1).

6. Un purificateur d'air (1) selon l'une quelconque des déclarations précédentes, **caractérisé par** un capteur qui est disposé dans l'unité d'absorption de CO₂ (6) et qui mesure le niveau de liquide dans l'unité d'absorption de CO₂ (6) pendant le dosage des solutions d'acide et de base.

7. Un climatiseur comprenant un purificateur d'air (1) tel que dans l'une quelconque des déclarations précédentes.
